# EUROPÄISCHE PATENTSCHRIFT

(11) **EP 1 102 098 B1**
(45) Veröffentlichungstag und Bekanntmachung des Hinweises auf die Patenterteilung: **02.02.2005**
(21) Anmeldenummer: 00125047.1
(22) Anmeldetag: 16.11.2000
(51) Int. Cl.: G02B 6/38

(54) **Steckverbinder für Lichtleiter**
Connector for optical fibres
Connecteur pour fibres optiques

(30) Priorität: 17.11.1999 DE 19955316
(43) Veröffentlichungstag der Anmeldung: 23.05.2001
(73) Patentinhaber: Delphi Technologies, Inc., Troy, MI 48007 (US)
(72) Erfinder: Halbach, Paul Gerhard J., 42369 Wuppertal (DE); Herlitz, Martin, 42897 Remscheid (DE); Scheckalla, Peter P., 42329 Wuppertal (DE); Uc, Kamil, 42115 Wuppertal (DE)
(74) Vertreter: Manitz, Finsterwald & Partner Gbr

(56) Entgegenhaltungen:
- EP-A- 0 814 353
- EP-B- 0 514 114
- US-A- 5 179 608
- US-A- 5 734 770
- US-A- 5 764 834

## Beschreibung

Die Erfindung betrifft einen Steckverbinder für Lichtleiter, mit zwei zusammensteckbaren, miteinander verriegelbaren Verbinderteilen, von denen zumindest eines mit wenigstens einer optischen Ferrule, d.h. wenigstens einem optischen Terminal, versehen ist.

EP0514114 offenbart eine Steckverbindung für Lichtleiter mit zwei zusammensteckbaren, miteinander verriegelbaren Verbinderteilen, wobei das Gehäuse des Steckers mit dem Empfängerteil verriegelbar ist und die Verriegelung mit einem bewegbaren Zweitverriegelungselement sichergestellt ist. Das Zweitverriegelungselement ist am Gehäuse des Steckers abgestützt und bewegbar relativ zum Basisteil und Gehäuse des Steckers. Ausserdem ist das Basisteil bewegbar relativ zum Gehäuse.

Ziel der Erfindung ist es, einen Steckverbinder der eingangs genannten Art zu schaffen, der bei hoher Zuverlässigkeit möglichst einfach handhabbar ist.

Diese Aufgabe wird nach der Erfindung dadurch gelöst, daß eine Verriegelungsvorrichtung vorgesehen ist, über die die einem ersten Verbinderteil zugeordnete Ferrule mit dem anderen Verbinderteil verriegelbar ist, daß das erste Verbinderteil ein die Ferrule aufnehmendes Basisteil, ein in Steck- oder Axialrichtung über einen definierten Bereich relativ zum Basisteil bewegbares Gehäuse und ein in Steck- oder Axialrichtung jeweils über einen definierten Bereich sowohl relativ zum Basisteil als auch relativ zum Gehäuse bewegbares Zweitverriegelungselement umfaßt, das federnd am Basisteil abgestützt und durch die Federkraft in eine in Steckrichtung betrachtet vordere Sicherungsposition belastet ist, in der es bei zusammengesteckten Verbinderteilen die Verriegelung der Ferrule sichert, wobei das Zweitverriegelungselement beim Zusammenstecken der beiden Verbinderteile zunächst entgegen der Federkraft aus seiner Sicherungsstellung herausbewegt ist, um eine Verriegelung der Ferrule zu ermöglichen, und erst nach erfolgter Verriegelung wieder seine Sicherungsstellung einnimmt, und wobei das Zweitverriegelungselement beim Trennen der beiden Verbinderteile mit einem Zurückziehen des Gehäuses relativ zum Basisteil entgegen der Federkraft aus seiner Sicherungsstellung herausbewegbar ist, um ein Entriegeln der Ferrule zu ermöglichen.

Aufgrund dieser Ausbildung ergibt sich bezüglich der Verriegelung eine Art Gut- und Schlecht-Funktion, durch die eine hohe Zuverlässigkeit erreicht wird. Der Steckverbinder ist überdies äußerst einfach handhabbar. So muß für ein Zusammenstecken und ein Trennen der beiden Verbinderteile lediglich das Verbindergehäuse entsprechend eingedrückt bzw. herausgezogen werden.

Das Gehäuse kann vorzugsweise über flexible Rastelemente so mit dem Basisteil gekoppelt sein, daß das Basisteil beim Zusammenstecken der beiden Verbinderteile mit dem Gehäuse mitbewegbar und beim Trennen der beiden Verbinderteile zunächst über einen definierten Bereich hinweg unter Mitnahme des Zweitverriegelungselements relativ zum Basisteil zurückbewegbar ist.

Das Zweitverriegelungselement ist zweckmäßigerweise durch eine am Basisteil abgestützte Druckfeder in seine Sicherungsposition belastet.

Von Vorteil ist auch, wenn das Zweitverriegelungselement durch ein vorzugsweise ringförmiges Schieberelement gebildet ist.

Bei einer zweckmäßigen praktischen Ausführungsform des erfindungsgemäßen Steckverbinders umfaßt die Verriegelungsvorrichtung wenigstens einen dem anderen Verbinderteil zugeordneten federnden Verriegelungsarm, der im Verlauf einer Relativverschiebung zwischen der Ferrule und dem anderen Verbinderteil zunächst entgegen der Federkraft durch das Ferrule auslenkbar und anschließend mit einer an der Ferrule vorgesehenen Verriegelungsfläche in Eingriff bringbar ist. Vorteilhafterweise sind wenigstens zwei einander gegenüberliegende Verriegelungsarme vorgesehen.

Die Verriegelungsfläche ist vorzugsweise durch eine an der Ferrule vorgesehene Nut gebildet. Bei dieser Nut kann es sich insbesondere um eine Umfangsnut handeln.

Eine bevorzugte praktische Ausführungsform zeichnet sich dadurch aus, daß das Zweitverriegelungselement beim Zusammenstecken der beiden Verbinderteile zunächst am ausgelenkten Verriegelungsarm zur Anlage kommt und dadurch aus seiner Sicherungsstellung herausbewegbar ist, und anschließend nach einem Einrasten des Verriegelungsarmes in die Verriegelungsfläche infolge der Federkraft wieder seine Sicherungsstellung einnimmt, um den Verriegelungsarm in Eingriff mit der Verriegelungsfläche zu halten.

Von Vorteil ist auch, wenn das Zweitverriegelungselement ringförmig ausgebildet und nach einem Einrasten des Verriegelungsarmes in die Verriegelungsfläche infolge der Federkraft zumindest teilweise über den Verriegelungsarm schiebbar ist.

Die Erfindung wird im folgenden anhand eines Ausführungsbeispiels unter Bezugnahme auf die Zeichnung näher erläutert; in dieser zeigen:
- Figur 1: eine perspektivische auseinandergezogene Darstellung eines zwei Verbinderteile umfassenden Steckverbinders für Lichtleiter,
- Figur 2: eine schematische, teilweise geschnittene Seitenansicht des Steckverbinders vor dem Zusammenstecken der beiden Verbinderteile,
- Figur 3: eine schematische, teilweise geschnittene Seitenansicht des Steckverbinders, wobei die beiden Verbinderteile bereits soweit zusammengesteckt sind, daß die Verriegelungsarme auseinandergespreizt und das Zweitverriegelungselement entgegen der Federkraft aus seiner Sicherungsstellung herausbewegt ist,
- Figur 4: eine schematische teilweise geschnittene Seitenansicht des Steckverbinders, wobei die beiden Verbinderteile vollständig zusammengesteckt und die Ferrule mit dem anderen Verbinderteil verriegelt sind,
- Figur 5: eine schematische, teilweise geschnittene Seitenansicht des Steckverbinders, wobei das Gehäuse des ersten Verbinderteils zum Trennen des Steckverbinders bereits soweit herausgezogen ist, daß das Zweitverriegelungselement die Verriegelungsarme freigibt,
- Figur 6: eine schematische, teilweise geschnittene Seitenansicht des Steckverbinders, wobei die beiden Verbinderteile bereits soweit auseinandergezogen sind, daß die Verriegelungsarme außer Eingriff mit den Ferrules sind, und
- Figur 7: eine schematische teilweise geschnittene Seitenansicht des Steckverbinders, wobei die beiden Verbinderteile wieder vollständig voneinander getrennt sind.

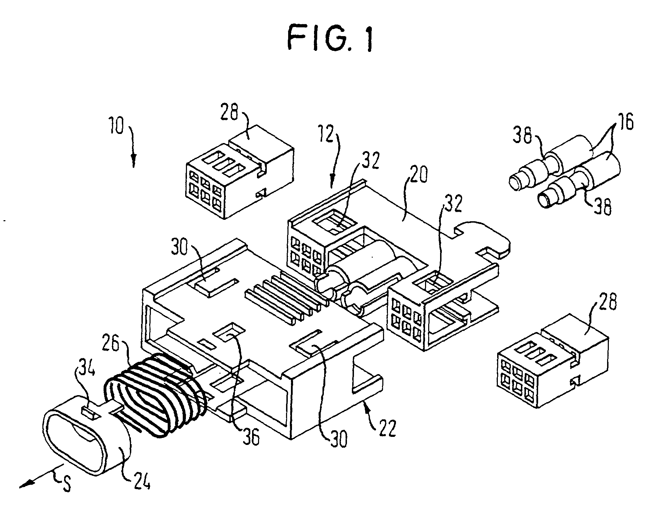

Die Figuren 1 bis 7 zeigen in schematischer Darstellung einen Lichtleiter-Steckverbinder 10 mit zwei zusammensteckbaren, miteinander verriegelbaren Verbinderteilen 12, 14, von denen das erste mit zwei optischen, zwingenartigen Ferrules 16 versehen ist. Die dem ersten Verbinderteil 12 zugeordneten, mit entsprechenden Lichtleitern verbindbaren Ferrules 16 sind über eine Verriegelungsvorrichtung 18 mit dem anderen Verbinderteil 14 verriegelbar.

Das erste Verbinderteil 12 umfaßt ein die Ferrules 16 aufnehmendes Basisteil 20, ein in Steck- oder Axialrichtung S über einen definierten Bereich relativ zum Basisteil 20 bewegbares Gehäuse 22 und ein in Steckoder Axialrichtung S jeweils über einen definierten Bereich sowohl relativ zum Basisteil 20 als auch relativ zum Gehäuse 22 bewegbares Zweitverriegelungselement 24.

Das Zweitverriegelungselement 24 ist über eine Druckfeder 26 am Basisteil 20 abgestützt und durch die Federkraft in eine in Steckrichtung S betrachtet vordere Sicherungsposition belastet, in der es bei zusammengesteckten Verbinderteilen 12, 14 die Verriegelung der Ferrules sichert.

Dabei ist das Zweitverriegelungselement 24 beim Zusammenstecken der beiden Verbinderteile 12, 14 zunächst entgegen der Federkraft aus seiner Sicherungsstellung herausbewegbar, um eine Verriegelung der Ferrules 16 zu ermöglichen. Erst nach erfolgter Verriegelung nimmt es wieder seine Sicherungsstellung ein.

Beim Trennen der beiden Verbinderteile 12, 14 ist das Zweitverriegelungselement 24 mit einem Zurückziehen des Gehäuses 22 relativ zum Basisteil entgegen der Kraft der Druckfeder 26 aus seiner Sicherungsstellung herausbewegbar, um ein Entriegeln der Ferrules 16 zu ermöglichen.

Gemäß Figur 1 umfaßt das erste Verbinderteil 12 überdies zwei modulare 6-Wege-Verbinderelemente 28, die bei vorliegendem Ausführungsbeispiel von zwei einander gegenüberliegenden Seiten her in das Basisteil 20 einsetzbar sind.

Das Gehäuse 22 ist über flexible Rastelemente 30 so mit dem Basisteil 20 koppelbar, daß das Basisteil 20 beim Zusammenstecken der beiden Verbinderteile 12, 14 mit dem Gehäuse 22 mitbewegbar und beim Trennen der beiden Verbinderteile 12, 14 zunächst über einen definierten Bereich hinweg unter Mitnahme des Zweitverriegelungselements 24 relativ zum Basisteil 20 zurückbewegbar ist. Beim vorliegenden Ausführungsbeispiel wirken die flexiblen Rastelemente 30 mit im Basisteil 20 vorgesehenen Ausnehmungen 32 zusammen.

Wie insbesondere anhand der Figur 1 zu erkennen ist, kann das Zweitverriegelungselement 24 insbesondere durch ein ringförmiges Schieberelement gebildet sein.

Am Gehäuse 22 können beispielsweise Kunststoffinger oder dergleichen vorgesehen sein, über die das Zweitverriegelungselement 24 beim Trennen der Verbinderteile 12, 14 mit einem Zurückziehen des Gehäuses 22 mitgenommen wird. Dabei kann dieses Zweitverriegelungselement 24 über einen Bereich von beispielsweise etwa 3,5 mm mitgenommen werden, bevor das Basisteil 20 zurückbewegt wird. Damit wird die Verriegelung der Ferrules 16 freigegeben.

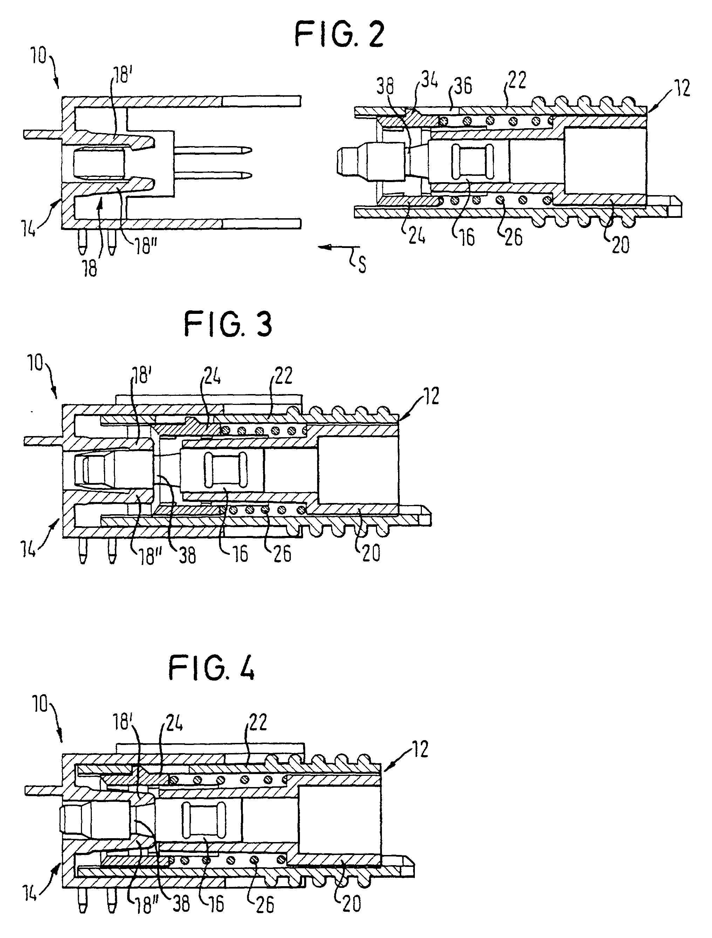

Wie anhand der Figuren 2 bis 7 zu erkennen ist, kann am Zweitverriegelungselement 24 ein entsprechender Ansatz 34 vorgesehen sein, der in eine im Gehäuse 22 vorgesehene Ausnehmung 36 eingreift.

Die Verriegelungsvorrichtung 18 umfaßt dem anderen Verbinderteil 14 zugeordnete, einander gegenüberliegende, federnde Verriegelungsarme 18', 18", die im Verlauf einer Relativverschiebung zwischen den Ferrules 16 und dem anderen Verbinderteil 14 zunächst entgegen der Federkraft durch die Ferrules 16 auslenkbar und anschließend mit an den Ferrules 16 vorgesehenen Verriegelungsflächen 38 in Eingriff bringbar sind. Dabei können mit einer jeweiligen Ferrule 16 beispielsweise zwei einander gegenüberliegende Verriegelungsarme 18', 18" zusammenwirken. Grundsätzlich ist es auch denkbar, daß ein jeweiliger Verriegelungsarm mit beiden Ferrules 16 zusammenwirkt.

Im vorliegenden Fall sind die Verriegelungsflächen jeweils durch eine an der betreffenden Ferrule 16 vorgesehene Nut, insbesondere eine Umfangsnut 38, gebildet.

Das Zweitverriegelungselement 24 kommt beim Zusammenstecken der beiden Verbinderteile 12, 14 zunächst an den auseinandergespreizten Verriegelungsarmen 18', 18" zur Anlage, wodurch es aus seiner Sicherungsstellung herausbewegt wird. Nach einem Einrasten der Verriegelungsarme 18', 18" in die Verriegelungsflächen 38 nimmt das Zweitverriegelungselement 24 in Folge der Kraft der Druckfeder 26 wieder seine Sicherungsstellung ein, um die Verriegelungsarme 18', 18" in Eingriff mit der Verriegelungsfläche 38 zu halten. Dabei ist das ringförmige Zweitverriegelungselement 24 nach dem Einrasten der Verriegelungsarme 18', 18" in die Verriegelungsflächen 38 zumindest teilweise über die Verriegelungsarme 18', 18" schiebbar.

Das Zweitverriegelungselement 24 kann beim Zusammenstecken der beiden Verbinderteile 12, 14 beispielsweise um einen Betrag von etwa 3 mm zurückgeschoben werden, bevor die Verriegelungsarme 18', 18" in die Verriegelungsflächen 38 einrasten.

Dem anderen Verbinderteil 14 kann beispielsweise wenigstens ein elektrooptisches Modul zugeordnet sein. Unter einem solchen elektrooptischen Modul ist ein beliebig ausgeführtes Modul zu verstehen, in dem optische Signale in elektrische Signale und elektrische Signale in optische Signale umgewandelt werden.

Figur 2 zeigt den Steckverbinder 10 vor dem Zusammenstecken der beiden Verbinderteile 12, 14.

In der Darstellung gemäß Figur 3 sind die beiden Verbinderteile 12, 14 bereits soweit zusammengesteckt daß die Verriegelungsarme 18', 18" auseinandergespreizt und das Zweitverriegelungselement 24 entgegen der Kraft der Druckfeder 26 aus seiner Sicherungsstellung zurückbewegt ist.

Bei der Darstellung gemäß Figur 4 sind die beiden Verbinderteile 12, 14 vollständig zusammengesteckt und die Ferrules 16 mit dem anderen Verbinderteil 12 verriegelt.

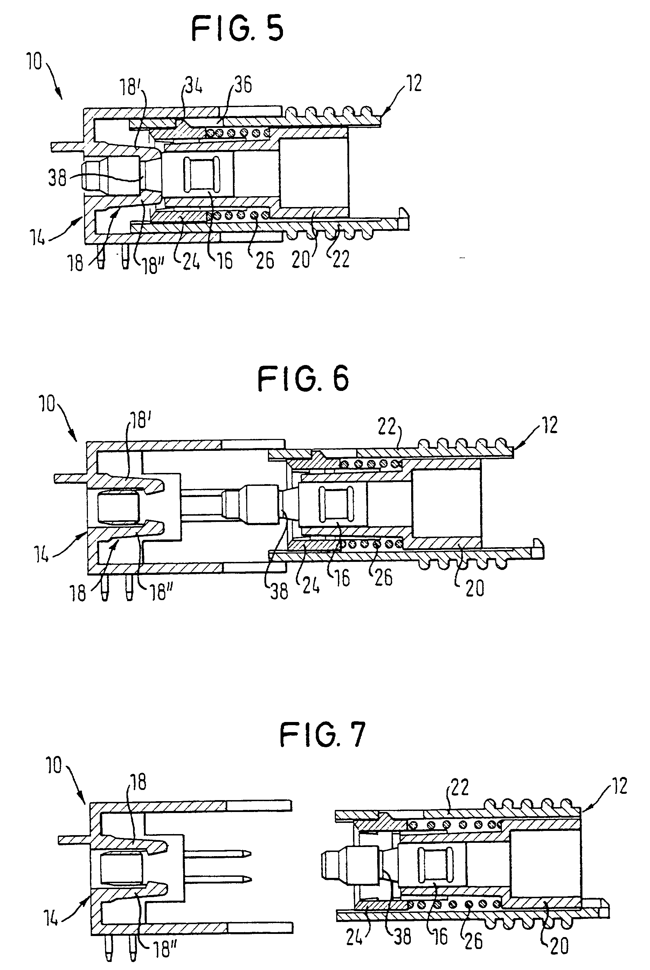

In den Figuren 5 bis 7 ist gezeigt, wie die beiden Verbinderteile 12, 14 wieder voneinander getrennt werden.

Bei der Darstellung gemäß Figur 5 ist das Gehäuse 22 des ersten Verbinderteils 12 bereits soweit herausgezogen, daß das Zweitverriegelungselement 24 die Verriegelungsarme 18', 18" freigibt.

Gemäß Figur 6 sind die beiden Verbinderteile 12, 14 bereits soweit auseinandergezogen, daß die Verriegelungsarme 18', 18" außer Eingriff mit den Ferrules 16 sind.

Bei der Darstellung gemäß Figur 7 sind die beiden Verbinderteile 12, 14 wieder vollständig voneinander getrennt.

### Bezugszeichenliste

- 10: Steckverbinder
- 12: erstes Verbinderteil
- 14: anderes Verbinderteil
- 16: Ferrules
- 18: Verriegelungsvorrichtung
- 18', 18": federnde Verriegelungsarme
- 20: Basisteil
- 22: Gehäuse
- 24: Zweitverriegelungselement
- 26: Druckfeder
- 28: modulare Verbinderelemente
- 30: flexible Rastelemente
- 32: Ausnehmungen
- 34: Ansatz
- 36: Ausnehmung
- 38: Verriegelungsfläche, Nut, Umfangsnut

- S: Steck- oder Axialrichtung

## Patentansprüche

1. Steckverbinder (10) für Lichtleiter, mit zwei zusammensteckbaren, miteinander verriegelbaren Verbinderteilen (12, 14), von denen zumindest eines (12) mit wenigstens einer optischen Ferrule (16) versehen ist,
**dadurch gekennzeichnet,**
**daß** eine Verriegelungsvorrichtung (18) vorgesehen ist, über die die einem ersten Verbinderteil (12) zugeordnete Ferrule (16) mit dem anderen Verbinderteil (14) verriegelbar ist, daß das erste Verbinderteil (12) ein die Ferrule (16) aufnehmendes Basisteil (20), ein in Steck- oder Axialrichtung (S) über einen definierten Bereich relativ zum Basisteil (20) bewegbares Gehäuse (22) und ein in Steck- oder Axialrichtung (S) jeweils über einen definierten Bereich sowohl relativ zum Basisteil (20) als auch relativ zum Gehäuse (22) bewegbares Zweitverriegelungselement (24) umfaßt, das federnd am Basisteil (20) abgestützt und durch die Federkraft in eine in Steckrichtung (S) betrachtet vordere Sicherungsposition belastet ist, in der es bei zusammengesteckten Verbinderteilen (12, 14) die Verriegelung der Ferrule (16) sichert, wobei das Zweitverriegelungselement (24) beim Zusammenstecken der beiden Verbinderteile (12, 14) zunächst entgegen der Federkraft aus seiner Sicherungsstellung herausbewegt ist, um eine Verriegelung der Ferrule (16) zu ermöglichen, und erst nach erfolgter Verriegelung wieder seine Sicherungsstellung einnimmt, und wobei das Zweitverriegelungselement (24) beim Trennen der beiden Verbinderteile (12, 14) mit einem Zurückziehen des Gehäuses (22) relativ zum Basisteil (20) entgegen der Federkraft aus seiner Sicherungsstellung herausbewegbar ist, um ein Entriegeln der Ferrule (16) zu ermöglichen.

2. Steckverbinder nach Anspruch 1,
**dadurch gekennzeichnet,**
**daß** das Gehäuse (22) vorzugsweise über flexible Rastelemente (30) so mit dem Basisteil (20) gekoppelt ist, daß das Basisteil (20) beim Zusammenstecken der beiden Verbinderteile (12, 14) mit dem Gehäuse (22) mitbewegbar und beim Trennen der beiden Verbinderteile (12, 14) zunächst über einen definierten Bereich hinweg unter Mitnahme des Zweitverriegelungselements (24) relativ zum Basisteil (20) zurückbewegbar ist.

3. Steckverbinder nach Anspruch 1 oder 2,
**dadurch gekennzeichnet,**
**daß** das Zweitverriegelungselement (24) durch eine am Basisteil abgestützte Druckfeder (26) in seine Sicherungsposition belastet ist.

4. Steckverbinder nach einem der vorhergehenden Ansprüche,
**dadurch gekennzeichnet,**
**daß** das Zweitverriegelungselement (24) durch ein vorzugsweise ringförmiges Schieberelement gebildet ist.

5. Steckverbinder nach einem der vorhergehenden Ansprüche,
**dadurch gekennzeichnet,**
**daß** die Verriegelungsvorrichtung (18) wenigstens einen dem anderen Verbinderteil (14) zugeordneten federnden Verriegelungsarm (18', 18") umfaßt, der im Verlauf einer Relativverschiebung zwischen der Ferrule (16) und dem anderen Verbinderteil (14) zunächst entgegen der Federkraft durch das Ferrule (16) auslenkbar und anschließend mit einer an der Ferrule (16) vorgesehenen Verriegelungsfläche (38) in Eingriff bringbar ist.

6. Steckverbinder nach Anspruch 5,
**dadurch gekennzeichnet,**
**daß** wenigstens zwei einander gegenüberliegende Verriegelungsarme (18', 18") vorgesehen sind.

7. Steckverbinder nach Anspruch 5 oder 6,
**dadurch gekennzeichnet,**
**daß** die Verriegelungsfläche durch eine an der Ferrule (16) vorgesehene Nut (38) gebildet ist.

8. Steckverbinder nach Anspruch 7,
**dadurch gekennzeichnet,**
**daß** die Nut durch eine Umfangsnut (38) gebildet ist.

9. Steckverbinder nach einem der vorhergehenden Ansprüche,
**dadurch gekennzeichnet,**
**daß** das Zweitverriegelungselement (24) beim Zusammenstecken der beiden Verbinderteile (12, 14) zunächst am ausgelenkten Verriegelungsarm (18', 18") zur Anlage kommt und dadurch aus seiner Sicherungsstellung herausbewegbar ist, und anschließend nach einem Einrasten des Verriegelungsarmes (18', 18") in die Verriegelungsfläche (38) infolge der Federkraft wieder seine Sicherungsstellung einnimmt, um den Verriegelungsarm (18', 18") in Eingriff mit der Verriegelungsfläche (38) zu halten.

10. Steckverbinder nach einem der vorhergehenden Ansprüche,
**dadurch gekennzeichnet,**
**daß** das Zweitverriegelungselement (24) ringförmig ausgebildet und nach einem Einrasten des Verriegelungsarmes (18', 18") in die Verriegelungsfläche (38) infolge der Federkraft zumindest teilweise über den Verriegelungsarm schiebbar ist.

## Claims

1. Plug connector (10) for light conductors, comprising two connector parts (12, 14) which can be plugged together and latched to one another and of which at least one (12) is provided with at least one optical ferrule (16),
**characterized in that**
a latching device (18) is provided, via which the ferrule (16) which is associated with a first connector part (12) can be latched to the other connector part (14); **in that** the first connector part (12) comprises a base part (20) which accommodates the ferrule (16), a housing (22) which is movable in the plugging or axial direction (S) over a defined range relative to the base part (20) and a secondary latching element (24) which is movable in the plugging or axial direction (S) in each case over a defined range both relative to the base part (20) and relative to the housing (22), said secondary latching element (24) being resiliently supported at the base part (20) and being urged by the spring force, when considered in the plugging direction (S), into a forward securing position in which it secures the latching of the ferrule (16) when the connector parts (12, 14) are plugged together, with the secondary latching element (24) first being moved out of its securing position against the spring force on the plugging together of the two connector parts (12, 14) in order to enable a latching of the ferrule (16), and only assuming its securing position again after the completion of the latching, and with the secondary latching element (24) being movable out of its securing position on the separation of the two connector parts (12, 14) with a drawing back of the housing (22) relative to the base part (20) against the spring force in order to enable an unlatching of the ferrule (16).

2. Plug connector in accordance with claim 1, **characterized in that** the housing (22) is preferably coupled to the base part (20) via flexible latch elements (30) such that the base part (20) can be moved together with the housing (22) on the plugging together of the two connector parts (12, 14) and, on the separation of the two connector parts (12, 14), can first be moved back relative to the base part (20) over a defined range while taking along the secondary latching element (24).

3. Plug connector in accordance with claim 1 or claim 2, **characterized in that** the secondary latching element (24) is urged into its securing position by a compression spring (26) which is supported at the base part.

4. Plug connector in accordance with any one of the preceding claims, **characterized in that** the secondary latching element (24) is formed by a preferably ring-shaped slider element.

5. Plug connector in accordance with any one of the preceding claims, **characterized in that** the latching device (18) comprises at least one resilient latching arm (18', 18") which is associated with the other connector part (14) and which in the course of a relative displacement between the ferrule (16) and the other connector part (14) is first deflectable against the spring force by the ferrule (16) and can then be brought into engagement with a latching surface (38) provided at the ferrule (16).

6. Plug connector in accordance with claim 5, **characterized in that** at least two mutually oppositely disposed latching arms (18', 18") are provided.

7. Plug connector in accordance with claim 5 or claim 6, **characterized in that** the latching surface is formed by a groove (38) provided at the ferrule (16).

8. Plug connector in accordance with claim 7, **characterized in that** the groove is formed by a peripheral groove (38).

9. Plug connector in accordance with any one of the preceding claims, **characterized in that**, on the plugging together of the two connector parts (12, 14), the secondary latching element (24) first comes to an abutment at the deflected latching arm (18', 18") and can thereby be moved out of its securing position, and then assumes its securing position again after a latching of the latching arm (18', 18") into the latching surface (38) as a result of the spring force in order to hold the latching arm (18', 18") in engagement with the latching surface (38).

10. Plug connector in accordance with any one of the preceding claims, **characterized in that** the secondary latching element (24) is ring shaped and can be at least partly pushed over the latching arm after a latching of the latching arm (18', 18") into the latching surface (38) as a result of the spring force.

## Revendications

1. Connecteur (10) pour fibre optique avec deux parties de connecteur (12, 14) pouvant être enfichées l'une dans l'autre et qui sont verrouillables entre elles, dont au moins une (12) est munie d'au moins un manchon optique, **caractérisé en ce qu'**il est prévu un dispositif de verrouillage (18), par l'intermédiaire duquel le manchon (16) associé avec une première partie de connecteur (12) est verrouillable avec l'autre partie de connecteur (14) et **en ce que** la première partie de connecteur (12) comprend une partie de base (20) recevant le manchon (16), un boîtier (22) pouvant être déplacé sur une zone définie par rapport à la partie de base (20) en direction de connexion ou direction axiale (S) et un élément de verrouillage additionnel (24) qui peut être déplacé aussi bien par rapport à la partie de base (20) que par rapport au boîtier (22) en direction de connexion ou direction axiale (S) respectivement sur une zone définie et qui s'appuie de manière souple sur la partie de base (20) en étant mis en tension par la force d'un ressort dans une position de sécurité qui est située à l'avant en regardant dans le sens de la connexion (S) et dans laquelle il garantit le verrouillage du manchon (16) lorsque les parties de connecteur (12, 14) sont assemblées, alors que, lors de l'assemblage des deux parties de connecteur (12, 14), l'élément de verrouillage additionnel (24) est d'abord déplacé hors de sa position de sécurité contre la force du ressort pour permettre un verrouillage du manchon (16) et ne reprend sa position de sécurité que lorsque le verrouillage a été effectué et alors qu'en tirant vers l'arrière le boîtier (22) par rapport à la partie de base (20), l'élément de verrouillage additionnel (24) peut, lors de la séparation des deux parties de connecteur (12, 14), être déplacé contre la force du ressort hors de sa position de sécurité pour permettre un déverrouillage du manchon (16).

2. Connecteur selon la revendication 1, **caractérisé en ce que** le boîtier (22) est, de préférence par l'intermédiaire d'éléments d'arrêt souples (30), accouplé avec la partie de base (20) de telle façon que, lors de l'assemblage des deux parties de connecteur (12, 14), la partie de base (20) peut être déplacée simultanément avec le boîtier (22) et peut, lors de la séparation des deux parties de connecteur (12, 14), peut tout d'abord être déplacée en retour au-delà d'une zone définie par rapport à la partie de base (20) en entraînant l'élément de verrouillage additionnel (24).

3. Connecteur selon la revendication 1 ou 2, **caractérisé en ce que** l'élément de verrouillage additionnel (24) est mis en tension dans sa position de sécurité par un ressort de compression (26) s'appuyant sur la partie de base.

4. Connecteur selon l'une quelconque des revendications précédentes, **caractérisé en ce que** l'élément de verrouillage additionnel (24) est formé par un élément de coulisseau de préférence en forme d'anneau.

5. Connecteur selon l'une quelconque des revendications précédentes, **caractérisé en ce que** le dispositif de verrouillage (18) comprend au moins un bras de verrouillage (18', 18") souple associé à l'autre partie de connecteur (14) qui, lors d'un coulissement relatif entre le manchon (16) et l'autre partie de connecteur (14), peut tout d'abord être dévié par le manchon (16) contre la force du ressort et ensuite être mis en prise avec une surface de verrouillage (38) prévue sur le manchon (16).

6. Connecteur selon la revendication 5, **caractérisé en ce qu'**au moins deux bras de verrouillage (18', 18") opposés l'un à l'autre sont prévus.

7. Connecteur selon la revendication 5 ou 6, **caractérisé en ce que** la surface de verrouillage est formée par une rainure (38) prévue sur le manchon (16).

8. Connecteur selon la revendication 7, **caractérisé en ce que** la rainure est formée par une rainure périphérique (38).

9. Connecteur selon l'une quelconque des revendications précédentes, **caractérisé en ce que**, lors de l'assemblage des deux parties de connecteur (12, 14), l'élément de verrouillage additionnel (24) s'appuie tout d'abord sur le bras de verrouillage dévié (18', 18") et peut ainsi être déplacé hors de sa position de sécurité et reprend ensuite à nouveau sa position de sécurité après un engrènement du bras de verrouillage (18', 18") dans la surface de verrouillage (38) sous l'effet de la force du ressort pour maintenir le bras de verrouillage (18', 18") en prise avec la surface de verrouillage (38).

10. Connecteur selon l'une quelconque des revendications précédentes, **caractérisé en ce que** l'élément de verrouillage additionnel (24) est configuré en forme d'anneau et peut, après un engrènement du bras de verrouillage (18', 18") dans la surface de verrouillage (38) sous l'effet de la force du ressort, coulisser au moins partiellement sur le bras de verrouillage.
